(19) Europäisches Patentamt
European Patent Office
Office européen des brevets

(11) **EP 4 267 673 B1**

(12) **EUROPEAN PATENT SPECIFICATION**

(45) Date of publication and mention
of the grant of the patent:
**29.04.2026 Bulletin 2026/18**

(21) Application number: **21840958.9**

(22) Date of filing: **21.12.2021**

(51) International Patent Classification (IPC):
**C08L 23/12** *(2006.01)*

(52) Cooperative Patent Classification (CPC):
(C-Sets available)
**C08L 23/12;** C08L 2205/03; C08L 2207/02   (Cont.)

(86) International application number:
**PCT/EP2021/087112**

(87) International publication number:
**WO 2022/144251 (07.07.2022 Gazette 2022/27)**

(54) **POLYPROPYLENE COMPOSITION WITH HIGH MULTI-AXIAL IMPACT RESISTANCE AND IMPROVED TIGER STRIPE BEHAVIOUR**

POLYPROPYLENZUSAMMENSETZUNG MIT HOHER MULTIAXIALER SCHLAGFESTIGKEIT UND VERBESSERTEM TIGERSTREIFENVERHALTEN

COMPOSITION DE POLYPROPYLÈNE DOTÉE D'UNE RÉSISTANCE ÉLEVÉE AUX CHOCS MULTI-AXIAUX ET D'UN MEILLEUR COMPORTEMENT AUX ZÉBRURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2020 EP 20217342**

(43) Date of publication of application:
**01.11.2023 Bulletin 2023/44**

(73) Proprietor: **SABIC Global Technologies B.V.
4612 PX Bergen op Zoom (NL)**

(72) Inventors:
• **FAHIMI, Zahra
6160 GA Geleen (NL)**
• **VAN BEEK, Dimphna, Johanna, Maria
6160 GA Geleen (NL)**
• **BONIZZI, Teena
6160 GA Geleen (NL)**

(74) Representative: **Sabic Intellectual Property Group
Sabic Intellectual Property Department
P.O. Box 3008
6160 GA Geleen (NL)**

(56) References cited:
**EP-A1- 2 495 280        EP-A1- 2 599 829
WO-A1-2017/060139**

(52) Cooperative Patent Classification (CPC): (Cont.)

C-Sets
**C08L 23/12, C08L 23/16, C08L 23/18**

**Description**

The present invention relates to a polymer composition comprising a heterophasic propylene copolymer, a butene-ethylene copolymer and optionally an inorganic filler. The present invention further relates to a process for the preparation of said polymer composition. The present invention further relates to an article comprising said polymer composition.

Polymer compositions, especially polymer compositions based on polypropylene are widely used in automotive industry thanks to their excellent mechanical and chemical properties. For automotive applications, it is preferred that such polymer compositions have an improved tiger stripe behavior.

Tiger stripes as used herein refers to color and gloss variations on the surface of an injection molded article, which occurs because of unstable mold filling properties of the molten polymer as it is being injected into the mold and formed into the desired shape. Usually these variations can be observed as alternating areas of low and high gloss and/or light or darker color, wherein the areas usually are substantially perpendicular to the flow direction of an injection moulded article. Tiger stripes may also be referred to as tiger marks or tiger (flow) marking.

Examples of such appearance and a more scientific discussion on the cause of tiger stripes may be found in the publication of Hirano et al, Journal of Applied Polymer Science, Vol. 104, 192-199 (2007). A further publication titled "Morphological Analysis of Tiger-Stripe and Striped Pattern Deterioration on injection Moulding of Polypropylene/Rubber/Talc Blends" in name of K. Hirano, Y. Suetsugu, S. Tamura and T. Kanai, provides further background on the matter.

Polymer composition based on polypropylene with improved tiger stripe behavior is known in the art, for example: US 2002/0035209 discloses a polypropylene resin composition containing two kinds of specified propylene-ethylene block copolymers having mutually different structures. More particularly, this reference discloses a polypropylene resin composition providing a molded article excellent in appearance when formed into a molded article because flow marks hardly generate, in other words, a die swell is high and few fish eyes generate.

EP3083819B1 discloses a polymer composition comprising two heterophasic propylene copolymers having an improved tiger stripe performance.

WO02/28958 , WO2004/087805 and WO2010/0108866 provide a solution that generally consist in the provision of a masterbatch which may be diluted with additional polyolefins so as to provide a compound having the desired tiger stripe performance and mechanical properties.

EP 2495280 discloses a polyolefin composition comprising

a. 35 - 90 wt%, based on the weight of the polyolefin composition, of a heterophasic polypropylene composition comprising

i. 10 - 50 wt%, based on the weight of the heterophasic polypropylene composition, of a first propylene homopolymer (PPH1) having an MFR2 measured according to ISO 1133 of from 30 - 80 g/1 0 min (230°C, 2.16 kg),

ii. 20 - 65 wt%, based on the weight of the heterophasic polypropylene composition, of a second propylene homopolymer (PPH2) having an MFR2 measured according to ISO 1133 of from 100 - 250 g/10 min (230°C, 2.16 kg),

iii. 5 - 30 wt%, based on the weight of the heterophasic polypropylene composition of a first xylene cold soluble fraction (XS1) having an intrinsic viscosity IVXS1 of 2.0 - 3.0 dl/g,

iv. 5 - 25 wt%, based on the weight of the heterophasic polypropylene composition of a second xylene cold soluble (XS2) fraction having an intrinsic viscosity IVXS2 of 1.5 - 2.8 dl/g, with the proviso that IVXS1 $\neq$ IVXS2

b. 5 - 40 wt%, based on the weight of the polyolefin composition, of an inorganic filler, and

c. 5 - 25 wt%, based on the weight of the polyolefin composition, of an ethylene/1-butene elastomer.

However the prior arts mentioned above does not have solution to another known issue of many polymer compositions based on polypropylene: Poor low temperature multi-axial impact resistance.

Hence it is the object of the present invention to provide a polymer composition that combines an excellent low temperature multi-axial impact resistance and an improved tiger stripe behavior. The polymer composition should also have sufficient flowability which makes it suitable for injection moulding application.

It was found that the object of the present invention is achieved by a polymer composition comprising a heterophasic propylene copolymer and a butene-ethylene copolymer,

wherein the melt flow index (MFI) of the polymer composition is in the range from 20 to 100 dg/min as measured according to ISO1133-1:2011 with a 2.16kg load at 230°C,

wherein the amount of the heterophasic propylene copolymer is in the range from 62.3 to 93.4 wt% based on the total amount of the polymer composition, wherein the melt flow index (MFI) of the heterophasic propylene copolymer is in the range from 29 to 103 dg/min as measured according to ISO1133-1:2011 with a 2.16kg load at 230°C, wherein the xylene soluble part of the heterophasic propylene copolymer is in the range from 12.9 to 27.8 wt% based on the total amount of the heterophasic propylene copolymer as measured according to ISO16152:2005,
wherein the intrinsic viscosity of the xylene soluble part of the heterophasic propylene copolymer is in the range from 1.53 to 1.89 dl/g as measured according to ISO1628-3:2010,
wherein the amount of the butene-ethylene copolymer is in the range from 2.5 to 31.0 wt% based on the total amount of the polymer composition.

It was surprisingly found that the polymer composition according to the present invention has a high impact resistance and shows an excellent balance between impact resistance and warpage.

For avoidance of any confusion, "excellent low temperature multi-axial impact resistance" means the multi-axial impact resistance of the polymer composition is at least 42 J as measured according to ISO 6603-2:2000 A2 at -20°C. For the purpose of the present invention, other impact resistance test methods, e.g. Izod or Charpy is not suitable as these methods measure impact resistance on one axis. Hence the result of Izod or Charpy is not able to reflect the multi-axial impact resistance.

The heterophasic propylene copolymer

A heterophasic propylene copolymer typically has a two-phase structure; it comprises a propylene-based semi-crystalline polymer as matrix and a dispersed elastomer phase, usually an ethylene-$\alpha$-olefin rubber. Heterophasic propylene copolymers are usually prepared in one polymerization process.

The heterophasic propylene copolymer preferably comprises a propylene polymer as matrix and a ethylene-$\alpha$-olefin copolymer as dispersed phase wherein the moiety of $\alpha$-olefin in the ethylene-$\alpha$-olefin copolymer is derived from at least one $\alpha$-olefin having 3 to 20 carbon atoms, for example the ethylene-$\alpha$-olefin copolymer can be an ethylene-propylene copolymer, for example the ethylene-$\alpha$-olefin copolymer can be an ethylene-butene copolymer, for example the ethylene-$\alpha$-olefin copolymer can be an ethylene-hexene copolymer, for example the ethylene-$\alpha$-olefin copolymer can be an ethylene-octene copolymer, for example the ethylene-$\alpha$-olefin copolymer can be an ethylene-propylene-butene copolymer, for example the ethylene-$\alpha$-olefin copolymer can be an ethylene-propylene-hexene copolymer.

In the ethylene-$\alpha$-olefin copolymer, the amount of the moiety derived from ethylene is preferably in the range from 40 to 52 wt%, preferably from 45 to 50 wt% based on the total amount of the ethylene-$\alpha$-olefin copolymer. Preferably the ethylene-$\alpha$-olefin copolymer is an ethylene-propylene copolymer.

The propylene polymer in the heterophasic propylene copolymer can be a propylene homopolymer or/and an ethylene-propylene copolymer wherein the amount of the moiety derived from ethylene is in the range from 0.3 to 3.9 wt% based on the total amount of the ethylene-propylene copolymer. Preferably the propylene polymer in the heterophasic propylene copolymer is a propylene homopolymer as this will increase the stiffness of the composition of the invention.

The amount of the propylene polymer is preferably in the range from 65 to 85 wt%, preferably from 70 to 80 wt%, more preferably from 73 to 78 wt% based on the total amount of the heterophasic propylene copolymer.

The amount of the ethylene-$\alpha$-olefin copolymer is preferably in the range from 15 to 35 wt%, preferably from 20 to 30 wt%, more preferably from 22 to 27 wt% based on the total amount of the heterophasic propylene copolymer.

Preferably, the sum of the propylene polymer and the ethylene-$\alpha$-olefin copolymer is 100wt% based on the heterophasic propylene copolymer.

The heterophasic propylene copolymer can be divided into an xylene-soluble portion and an xylene-insoluble portion. The amount of the xylene-soluble portion is in the range from 12.9 to 27.8 wt%, preferably in the range from 14.3 to 24.8 wt%, more preferably in the range from 18.9 to 22.6 wt% based on the total amount of the heterophasic propylene copolymer as determined according to ISO16152:2005. The amount of the xylene-insoluble portion based on the total amount of the heterophasic propylene copolymer can be calculated by the following equation:

$$CXI = 100 \text{ wt\%} - CXS$$

The intrinsic viscosity of the xylene-soluble portion is in the range from 1.53 to 1.89 dl/g, preferably in the range from 1.68 to 1.87 dl/g as measured according to ISO1628-1:2009.

The intrinsic viscosity of the xylene-insoluble portion is preferably in the range from 0.91 to 1.56 dl/g, more preferably in the range from 1.12 to 1.34 dl/g, more preferably in the range from 1.20 to 1.29 dl/g as measured according to ISO1628-3:2010.

The term "Visbreaking" is well known techniques in the field of the invention, for example methods of visbreaking polypropylene have been disclosed in US4282076 and EP0063654.

To avoid confusion, in the context of the present invention, "Visbreaking", "Controlled rheology" and "Shifting" or "Peroxide-shifting" refer to the same process; "Visbroken", "Produced with controlled rheology", "Shifted" or "Peroxide-shifted" as adjectives are used to indicate a heterophasic propylene copolymer is prepared by such process.

The heterophasic propylene copolymer is preferably visbroken.

Several different types of chemical reactions which are well known can be employed for visbreaking propylene based polymers. An example is thermal pyrolysis, which is accomplished by exposing a propylene based polymer to high temperatures, e.g., in an extruder at 350 °C or higher. Another approach is exposure of a propylene based polymer to powerful oxidizing agents. A further approach is exposure to ionizing radiation. It is preferred however that visbreaking is carried out using a peroxide, that is the reason "Shifting" is often referred as "Peroxide-shifting" in literatures. Such materials, at elevated temperatures, initiate a free radical chain reaction resulting in beta-scission of the propylene based polymer molecules. The visbreaking may be carried out directly after polymerisation and removal of unreacted monomer and before pelletisation (during extrusion in an extruder wherein shifting of the propylene based polymer occurs). However, the invention is not limited to such an embodiment and visbreaking may also be carried out on already pelletised propylene based polymers generally contains stabilisers to prevent degradation.

Examples of suitable peroxides include organic peroxides having a decomposition half-life of less than 1 minute at the average process temperature during extrusion. Suitable organic peroxides include but are not limited to dialkyl peroxides, e.g. dicumyl peroxides, peroxyketals, peroxycarbonates, diacyl peroxides, peroxyesters and peroxydicarbonates. Specific examples of these include benzoyl peroxide, dichlorobenzoyi peroxide, dicumyl peroxide, di-tert-butyl peroxide, 2,5-dimethyl-2,5-di(peroxybenzoato)-3-hexene, 1,4-bis(tert-butylperoxyisopropyl)benzene, lauroyl peroxide, tert-butyl peracetate, a,a'-bis(tert-butylperoxy)diisopropylbenzene (Luperco® 802), 2,5- dimethyl-2,5-di(tert-butylperoxy)-3-hexene, 2,5-dimethyl-2,5-di(tert-butylperoxy)-hexane, tert-butyl perbenzoate, tert-butyl perphenylacetate, tert-butyl per-sec-octoate, tert-butyl perpivalate, cumyl perpivalate, cumene hydroperoxide, diisopropyl benzene hydroperoxide, 1 ,3-bis(t-butylperoxy- isopropyl)benzene, dicumyl peroxide, tert-butylperoxy isopropyl carbonate and any combination thereof. Preferably, a dialkyl peroxides is employed in the process according to the present invention. More preferably, the peroxide is a,a'-bis-(tert-butylperoxy)diisopropylbenzene, 2,5- dimethyl-2,5-di(tert-butylperoxy)-hexane or 3,6,9-Triethyl-3,6,9-trimethyl-1 ,4,7-triperoxonane. Preferably, the peroxide is selected from the group of non-aromatic peroxides.

It can easily be determined by the person skilled in the art through routine experimentation how much peroxide should be used to obtain a composition having the desired melt flow rate. This also depends on the half-life of the peroxide and on the conditions used for the melt-mixing, which in turn depend on the exact composition.

In a heterophasic propylene copolymer, during the visbreaking process, the type and the amount of comonomer in the dispersed phase and in the matrix of a propylene based polymer do not vary; the amount of the dispersed phase and of the matrix of the heterophasic propylene copolymer also do not vary.

In one embodiment, the amount of peroxide used to shift the heterophasic propylene copolymer is for example in the range from 0.01 to 0.5 wt%, for example from 0.08 to 0.2 wt%, for example from 0.1 to 0.2 wt% based on the total amount of the heterophasic propylene copolymer.

The MFI of the heterophasic propylene copolymer is in the range from 29 to 103 dg/min, preferably from 41 to 92 dg/min, more preferably from 45 to 83 dg/min as measured according to ISO1133-1:2011 with a 2.16kg load at 230°C.

Before shifting, the MFI of the heterophasic propylene copolymer is preferably in the range from 4.9 to 19.8 dg/10min, preferably from 7.8 to 16.0 dg/min, more preferably from 10.2 to 14.3 dg/10min as measured according to ISO1133-1:2011 with a 2.16kg load at 230°C.

The heterophasic propylene copolymers can be produced in a process comprising a polymerization step, for example, a multistage polymerization, such as bulk polymerization, gas phase polymerization, slurry polymerization, solution polymerization or any combinations thereof. Any conventional catalyst systems, for example, Ziegler-Natta or metallocene may be used. Such polymerization steps and catalysts are described, for example, in WO06/010414; Polypropylene and other Polyolefins, by Ser van der Ven, Studies in Polymer Science 7, Elsevier 1990; WO06/010414, US4399054 and US4472524. Preferably, the heterophasic propylene copolymer is made using Ziegler-Natta catalyst.

The heterophasic propylene copolymer may be prepared by a process comprising a polymerization step comprising

- 　polymerizing propylene and optionally ethylene and/or α-olefin in the presence of a catalyst system to obtain the propylene-based matrix and
- 　subsequently polymerizing ethylene with α-olefins in the presence of a catalyst system in the propylene-based matrix to obtain the heterophasic propylene copolymer consisting of a propylene-based matrix and a dispersed phase. These steps are preferably performed in different reactors. The catalyst systems for the first step and for the second step may be different or same.

Catalysts that are suitable for use in the preparation of the heterophasic propylene copolymer are also know in the art. Examples include Ziegler-Natta catalysts and metallocene catalysts. Preferably the catalyst used to produce the heterophasic propylene copolymer is free of phthalate, for example the catalyst comprises compounds of a transition metal of Group 4 to 6 of IUPAC, a Group 2 metal compound and an internal donor wherein said internal donor is selected from a group consisting of 1,3-diethers, for example 9,9-bis (methoxymethyl) fluorene, optionally substituted malonates, maleates, succinates, glutarates, benzoic acid esters, cyclohexene-1,2-dicarboxylates, benzoates, citraconates, aminobenzoates, silyl esters and derivatives and/or mixtures thereof.

For example the catalyst used in the preparation of the heterophasic propylene copolymer is a Ziegler-Natta catalyst comprising a procatalyst, at least one external donor, a co-catalyst and an optional internal donor wherein the external electron donor is chosen from the group consisting of a compound having a structure according to Formula III $(R^{90})_2N\text{-}Si(OR^{91})_3$ , a compound having a structure according to Formula IV: $(R^{92})Si(OR^{93})_3$ and mixtures thereof, wherein each of $R^{90}$, $R^{91}$, $R^{92}$ and $R^{93}$ groups are each independently a linear, branched or cyclic, substituted or unsubstituted alkyl having between 1 and 10 carbon atoms, preferably a linear unsubstituted alkyl having between 1 and 8 carbon atoms, preferably ethyl, methyl or n-propyl.

In one embodiment, $R^{90}$ and $R^{91}$ are each ethyl (compound of Formula III is diethylaminotriethoxysilane, DEATES). In another embodiment, $R^{92}$ is n-propyl and $R^{93}$ are each ethyl (compound of Formula IV is n-propyl triethoxysilane, nPTES) or in another embodiment $R^{92}$ is n-propyl and $R^{93}$ are each methyl (compound of Formula IV is n-propyl trimethoxysilane, nPTMS),

Preferably, the heterophasic propylene copolymer of the invention is prepared according to the process for the manufacture of the heterophasic propylene copolymer, wherein step I) is performed in the presence of a catalyst system comprising a Ziegler-Natta catalyst and at least one electron donor chosen from the group of nPTES, nPTMS, DEATES and mixtures thereof.

Preferably, the heterophasic propylene copolymer of the invention is is prepared by a catalyst system comprising a Ziegler-Natta catalyst and at least one external electron donor chosen from the group of a compound having a structure according to Formula III $(R^{90})_2N\text{-}Si(OR^{91})_3$, a compound having a structure according to Formula IV: $(R^{92})Si(OR^{93})_3$ and mixtures thereof.

A "co-catalyst" is a term well-known in the art in the field of Ziegler-Natta catalysts and is recognized to be a substance capable of converting the procatalyst to an active polymerization catalyst. Generally, the co-catalyst is an organometallic compound containing a metal from group 1, 2, 12 or 13 of the Periodic System of the Elements (Handbook of Chemistry and Physics, 70th Edition, CRC Press, 1989- 1990). The co-catalyst may include any compounds known in the art to be used as "co-catalysts", such as hydrides, alkyls, or aryls of aluminum, lithium, zinc, tin, cadmium, beryllium, magnesium, and combinations thereof. The co-catalyst may be a hydrocarbyl aluminum co-catalyst, such as triisobutylaluminum, trihexylaluminum, diisobutylaluminum hydride, dihexylaluminum hydride, isobutylaluminum dihydride, hexylaluminum dihydride, diisobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. In an embodiment, the cocatalyst is selected from triethylaluminum, triisobutylaluminum, trihexylaluminum, diisobutylaluminum hydride and dihexylaluminum hydride. More preferably, trimethylaluminium, triethylaluminium, triisobutylaluminium, and/or trioctylaluminium. Most preferably, triethylaluminium (abbreviated as TEAL). The co-catalyst can also be a hydrocarbyl aluminum compound such as tetraethyl-dialuminoxane, methylaluminoxane, isobutylaluminoxane, tetraisobutyl-dialuminoxane, diethyl-aluminumethoxide, diisobutylaluminum chloride, methylaluminum dichloride, diethylaluminum chloride, ethylaluminum dichloride and dimethylaluminum chloride, preferably TEAL.

For example, the procatalyst may be prepared by a process comprising the steps of providing a magnesium-based support, contacting said magnesium-based support with a Ziegler-Natta type catalytic species, an internal donor, and an activator, to yield the procatalyst. For example, the Examples of US 5,093,415 of Dow discloses an improved process to prepare a procatalyst. Preferably, the procatalyst is a chemical compound comprising titanium.

In the context of the present invention, the molar ratio between Si and Ti element in the catalyst system is preferably in the range from 0.1 to 40, preferably from 0.1 to 20, even more preferably from 1 to 20 and most preferably from 2 to 10. Preferably the molar ratio between Al and Ti element in the catalyst system is in the range from 5 to 500, preferably from 15 to 200, more preferably from 30 to 160, most preferably from 50 to 140.

In one embodiment, the molar ratio between Si and Ti element is the molar ratio between the external donor and the procatalyst.

In one embodiment, the molar ratio between Al and Ti element is the molar ratio between the co-catalyst and the procatalyst.

**Butene-ethylene copolymer**

The polymer composition according to the present invention comprises a butene-ethylene copolymer.

Preferably the butene-ethylene copolymer is an 1-butene-ethylene copolymer.

The butene-ethylene copolymer according to the present invention preferably has a shore A hardness in the range from 44 to 101, preferably from 48 to 92, more preferably from 51 to 79, more preferably from 54 to 68 as measured according to ASTM D2240-15.

The density of the butene-ethylene copolymer according to the present invention is preferably in the range from 0.857 to 0.901 g/cm$^3$, preferably from 0.861 to 0.888 g/cm$^3$, more preferably from 0.866 to 0.875 g/cm$^3$ as measured according to ASTM D792-13.

The MFI of the butene-ethylene copolymer is preferably in the range from 0.1 to 19.8 dg/min, preferably in the range from 0.3 to 11.3 dg/min, more preferably in the range from 0.4 to 3.4 dg/min as measured according to ASTM D1238-13 with a 2.16 kg load at 190°C.

The butene-ethylene copolymer may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The butene-ethylene copolymer may also be prepared using traditional types of heterogeneous multi-sited Ziegler-Natta catalysts.

**Inorganic filler**

The polymer composition according to the present invention may further comprises an inorganic filler.

Suitable examples of inorganic fillers include but are not limited to talc, calcium carbonate, wollastonite, barium sulfate, kaolin, glass flakes, laminar silicates (bentonite, montmorillonite, smectite) and mica.

For example, the inorganic filler is chosen from the group of talc, calcium carbonate, wollastonite, mica and mixtures thereof.

More preferably, the inorganic filler is talc. The mean particle size of talc (D50) of talc is preferably in the range from 0.1 to 10.2 micron, preferably from 0.6 to 7.1 micron, more preferably from 1.3 to 4.5 micron, even more preferably from 1.6 to 2.5 micron according to sedimentation analysis, Stockes' law (ISO 13317-3:2001).

**Optional additives**

The polymer composition according to the present invention may further contain additives, for instance nucleating agents and clarifiers, stabilizers, release agents, plasticizers, anti-oxidants, lubricants, antistatics, cross linking agents, scratch resistance agents, high performance fillers, pigments and/or colorants, flame retardants, blowing agents, acid scavengers, recycling additives, anti-microbials, anti-fogging additives, slip additives, anti-blocking additives, polymer processing aids and the like. Such additives are well known in the art. The amount of the additives is preferably to be at most 5.0 wt%, preferably at most 4.5 wt%, preferably at most 4 wt%, more preferably at most 3.8 wt% based on the total amount of the polymer composition. The reason for the preference of the low amount of additives is that at this amount, additives do not have negative influence on the desired properties of the polymer composition according to the present invention.

In a preferred embodiment, the polymer composition comprises a low amount or essentially free of coupling agent, wherein the amount of the coupling agent is preferably at most 0.46 wt%, preferably at most 0.40 wt%, more preferably at most 0.36 wt%, more preferably at most 0.31 wt% based on the total amount of the polymer composition, wherein the coupling agent is a maleic anhydride grafted polypropylene. For instance, the maleic anhydride grafted polypropylene can be Exxelor™ PO 1020 commercially available from ExxonMobil. The reason for the preference of the low amount of the coupling agent is that the combination of the inorganic filler and a high amount of the coupling agent potentially leads to a deterioration of the impact resistance of the polymer composition according to the present invention.

**Polymer composition**

The amount of the heterophasic propylene copolymer in the polymer composition is in the range from 62.3 to 93.4 wt%, preferably from 17.3 to 86.5 wt%, more preferably from 70.4 to 80.2 wt% based on the total amount of the polymer composition.

The amount of the butene-ethylene copolymer in the polymer composition is in the range from 2.5 to 31.0 wt%, preferably from 8.3 to 27.1 wt%, more preferably from 12.0 to 23.5 wt%, more preferably from 15.4 to 21.7 wt% based on the total amount of the polymer composition.

The amount of the optional inorganic filler is preferably at most 10 wt%, more preferably at most 7.5 wt% based on the total amount of the polymer composition based on the total amount of the polymer composition.

The total amount of the heterophasic propylene copolymer, the butene-ethylene copolymer, the optional inorganic filler is preferably at least 95 wt%, preferably at least 97 wt% and preferably at most 99.5 wt% based on the total amount of the polymer composition.

The MFI of the polymer composition is in the range from 20 to 100 dg/min, preferably from 21 to 70 dg/min, more preferably from 22 to 48 dg/min as measure according to ISO1133-1:2011 with a 2.16kg load at 230°C as in the preferred MFI range, the polymer composition has an optimal balance between impact performance and processability.

The polymer composition according to the present invention can for example be prepared in an extrusion process by melt-mixing the heterophasic propylene copolymer, the butene-ethylene copolymer, the optional inorganic filler and the optional additives in an extruder.

The present invention further relates to a process for the preparation of an article, preferably an automotive part, comprising the sequential steps of:

- Providing the polymer composition according to the present invention;
- Shaping the polymer composition according to the present invention into the article, preferably by injection molding.

The present invention further relates to the use of the polymer composition according to the present invention in the preparation of an article, preferably an automotive part, for example an automotive interior part, for example an automotive exterior part.

The present invention further relates to an article, preferably injection molded article, more preferably injection molded automotive article obtained or obtainable by the process of the present invention, wherein the amount of the polymer composition according to the present invention is at least 95 wt%, preferably at least 98 wt% based on the total amount of the article.

The present invention further relates to an automotive part comprising the polymer composition according to the invention wherein the amount of the polymer composition is at least 95 wt%, preferably at least 97 wt% based on the total amount of the automotive part. Preferably the automotive part is an air bag cover.

For the avoidance of any confusion, in the context of the present invention, the term "amount" can be understood as "weight"; "Melt flow index (MFI)" refers to the same physical property as "melt flow rate (MFR)".

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/-composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process. When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

**Materials**

Heterophasic propylene copolymers (HECOs):
PP15 is a grade commercially available from SABIC under the same grade names. PP5.5 is not a shift grade. The properties of PP15 are in Table 3.

Polymer A, B, C and D are heterophasic propylene copolymers prepared in an Innovene™ process, wherein a sequential two-reactor setup was employed. Polypropylene homopolymers were produced in first reactor and propylene-ethylene copolymers were produced in the second reactor.

There were three component in the catalyst system in the polymerization process: A procatalyst, an external electron donor and a co-catalyst. The procatalyst was prepared according to the description in WO2016198344, page 36, "Procatalyst III" paragraph; The external electron donor used for Polymer A and B was di(iso-propyl) dimethoxysilane (DiPDMS), the external electron donor used for Polymer C and D was n-propyltriethoxysilane (nPTES); the co-catalyst was triethylaluminium.

The process condition of Polymer A, B, C and D are given in Table 1:

Table 1: Preparation condition of Polymer A, B, C and D

| Polymer | A | B | C | D |
|---|---|---|---|---|
| R1 Te (°C) | 66 | 66 | 69.5 | 69.5 |

(continued)

| Polymer | A | B | C | D |
|---|---|---|---|---|
| R1 Pr (Bar) | 24 | 24 | 24 | 24 |
| Al/Ti (mol/mol) | 135 | 135 | 135 | 135 |
| Si/Ti (mol/mol) | 10 | 10 | 10 | 10 |
| R1 H2/C3 (mol/mol) | 0.08 | 0.05 | 0.01 | 0.065 |
| R1 split (wt%) | 80 | 74 | 76 | 86 |
| R2 Te (°C) | 66 | 57 | 66 | 59 |
| R2 Pr (Bar) | 24 | 24 | 24 | 24 |
| R2 H2/C3 (mol/mol) | 0.132 | 0.005 | 0.011 | 0.0042 |
| R2 C2/C3 (mol/mol) | 0.63 | 0.33 | 0.3 | 0.31 |
| R2 split (wt%) | 20 | 26 | 24 | 14 |

In Table 1, R1 refers to the first reactor, R2 refers to the second reactor, Te refers to temperature, Pr refers to pressure, Al/Ti is the molar ratio of the co-catalyst to the procatalyst, Si/Ti is the molar ratio of the external donor to the procatalyst, H2/C3 is the molar ratio of hydrogen to propylene, C2/C3 is the molar ratio of ethylene to propylene, split is the amount of substance produced in R1 or R2 based on the amount of the total Polymer A or B or C or D respectively.

Tafmer D605 is a butene-ethylene copolymer, commercially available from Mitsui Chemicals, having a density of 0.861 g/cm3 (ASTM D792-13), an MFI of 0.5 g/10min (ASTM D1238-13, 2.16 kg, 190°C) and a shore A hardness of 58 (ASTM D2240-15).

Engage 8200 is a polyolefin elastomer commercially available from Dow, having a density of 0.870 g/cm3 (ASTM D792-13), an MFI of 5.0 g/10 min (ASTM D1238-13, 2.16 kg, 190°C) and a shore A hardness of 66 (ASTM D2240-15).

Talc HTPultra 5c is an untrafine talc commercially available from IMI FABIC. The mean particle size of talc (D50) of Talc HTPultra 5c is 0.65 $\mu$m as measured according to sedimentation analysis, Stockes' law (ISO 13317-3:2001).

Luzenac HAR T84 is a high aspect ratio talc commercially available from Imerys Talc. The mean particle size of talc (D50) of Luzenac HAR T84 is 2 $\mu$m as measured according to sedimentation analysis, Stockes' law (ISO 13317-3:2001).

Additive package consists of 50 wt% color masterbatch, 20 wt% heat and process stabilizers, 10 wt% UV stabilizer, 20 wt% processing aid based on the total amount of the additive package.

Sample preparation

Compounding

Pellets of Examples were prepared by compounding the components in Table 4 in a KraussMaffei Berstorff ZE40A_UTX 43D twin-screw extruder with the following setting: 400 rpm screw speed, 150kg/h throught put, 38% torque, 235 °C as temperature and 13 bar as head pressure.

Specimens preparation

Specimens for the measurement of MFI were pellets obtained in the compounding step. Specimens for multi-axial impact resistant measurement were prepared by injection molding. The dimensions of the specimens used in multi-axial impact resistant measurement are defined in ISO 6603-2:2000 A2. The process for the preparation of specimens for tiger stripe evaluation is explained in Test method.

Test method

Melt flow index

Melt flow index (MFI) was measured according to ISO1133-1:2011 at 230°C with a 2.16kg load.

Weight percentage of the xylene-soluble part (CXS) and weight percentage of the xylene-insoluble part (CXI)

Weight percentage of the xylene-soluble part (CXS) of the heterophasic propylene copolymers was determined according to ISO16152:2005. Weight percentage of xylene-insoluble part (CXI) of the heterophasic propylene copolymers was calculated using the following equation:

$$CXI = 100 \text{ wt\%} - CXS$$

Both xylene-soluble and xylene-insoluble parts (CXS and CXI) obtained in this test were used in the intrinsic viscosity (IV) test.

Intrinsic viscosity (IV)

Intrinsic viscosity (IV) of CXS and CXI was determined according to ISO1628-1:2009 and ISO1628-3:2010 respectively in decalin at 135 °C.

Multi-axial impact resistance

Multi-axial impact resistance is determined according to ISO 6603-2:2000 A2 at -20°C.

Tiger stripe(TS) evaluation

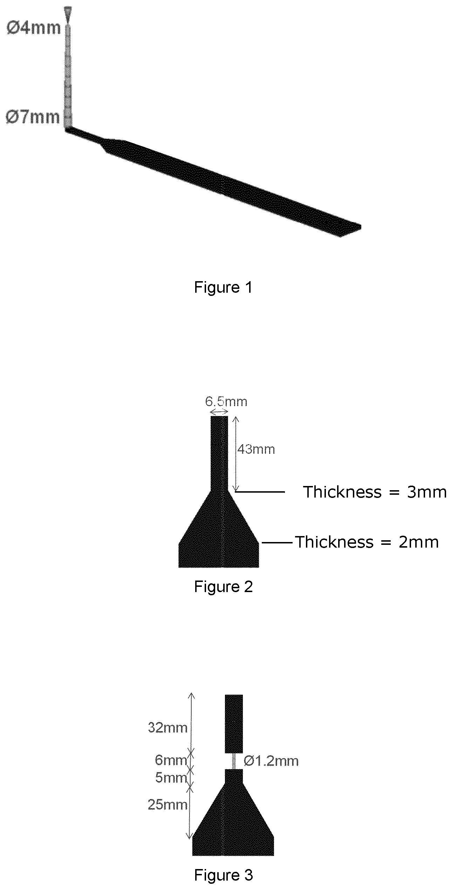

The pellets of Examples were injection moulded into two types of ruler-shaped test specimens using the feeding system and the mold as illustrated in Figure 1. The details of the two types of the molds are illustrated in Figures 2 and 3. The two types of the molds are called a fan gate (Figure 2) and a pin-point gate (Figure 3).

Figure 1 illustrates the feeding system and the mold. The molten sample was injected through a sprue having an upper end having a diameter of 4 mm and a lower end having a diameter of 7 mm. The lower end of the sprue merges with a rectangular channel of the mold, the rectangular channel having a width of 6.5 mm and a depth of 3 mm.

Figure 2 illustrates one type of a gate system called a fan gate. After the rectangular channel having a length of 43 mm, a fan shaped part follows having a length of 25 mm. Along the length of the fan shaped part, the width changes from 6.5 mm to 30 mm and the thickness changes from 3 mm to 2 mm. After the fan shaped part, an elongated part follows having a width of 30 mm and a thickness of 3 mm.

Figure 3 illustrates another type of a gate system called a pin-point gate. The pin-point gate is identical to the fan gate of Figure 2 except that the rectangular channel has three regions: a first region having a length of 32 mm and a width of 6.5 mm, followed by a second region having a length of 6 mm and a width of 1.2 mm, followed by a third region having a length of 5 mm and a width of 6 mm.

The melt temperature during the injection was set to 240 °C and the mold set to room temperature. Three different screw speeds were used according to Table 2. For each sample, 5 specimens having a smooth side and a textured side were obtained from fan gate and 5 specimens having a smooth side and a textured side were obtained from pin-point gate.

Table 2 Injection conditions

| Condition | Screw speed injection [mm/sec] | Flow rate [cm$^3$/sec] | Injection time [sec] |
|---|---|---|---|
| Low speed | 20 | 14.1 | 2.49 - 2.51 |
| Medium speed | 50 | 35.3 | 0.99 - 1.0 |
| High speed | 160 | 113.1 | 0.38 - 0.39 |

Each of the specimens was visually observed for occurrence of tiger stripes on its textured side. The quality of the surface was evaluated on a scale of 1 to 10, 10 being the best. An average TS score of each sample is calculated in Table 4.

| TS score | description |
|---|---|
| 1 | *very sharp transitions between glossy and dull sections visible seen from any angle |
| 2 | *sharp transitions between glossy and dull sections seen from any angle |
| 3 | very visible transitions between glossy and dull sections seen from any angle |

(continued)

| TS score | description |
|---|---|
| 4 | visible transitions between glossy and dull sections seen from any angle |
| 5 | less visible transitions between glossy and dull sections seen from any angle |
| 6 | visible transitions between glossy and dull sections seen from a specific angle only |
| 7 | less visible transitions between glossy and dull sections seen from a specific angle only |
| 8 | no transitions between glossy and dull sections visible and surface appearance inhomogeneous |
| 9 | no transitions between glossy and dull sections visible and surface appearance homogeneous |
| 10 | no transitions between glossy and dull sections visible and surface is perfect |

Result

Table 3 Properties of HECOs

| | Shifted | MFI (dg/min) | MFI before shifting (dg/min) | Amount of dispersed phase (wt%) | Amount of ethylene in the dispersed phase (wt%) | CXS (wt%) | IV CXS (dl/g) | CXI (wt%) | IV CXI (dl/g) |
|---|---|---|---|---|---|---|---|---|---|
| **Polymer A** | No | 40 | | 20 | 60 | 17.5 | 2.2 | 82.5 | 1.25 |
| **Polymer B** | No | 14 | | 26 | 44 | 21.5 | 4 | 78.5 | 1.4 |
| **Polymer C** | Yes | 60 | 12 | 24 | 48 | 21.9 | 1.85 | 78.1 | 1.25 |
| **Polymer D** | No | 77 | | 14 | 48 | 14 | 5.3 | 86 | 1.3 |
| **PP15** | No | 15 | | 13.5 | 49 | 14 | 3.2 | 86 | |

Table 4 Properties of PP compound

| | | CE1 | CE2 | CE3 | CE4 | CE5 | CE6 | IE1 | CE7 |
|---|---|---|---|---|---|---|---|---|---|
| PP15 | Wt% | 0 | 0 | 0 | 0 | 0 | 72.3 | 0 | 0 |
| Polymer A | Wt% | 72.3 | 0 | 0 | 0 | 0 | 0 | 0 | 0 |
| Polymer B | Wt% | 0 | 0 | 0 | 72.3 | 0 | 0 | 0 | 0 |
| Polymer C | Wt% | 0 | 0 | 72.3 | 0 | 72.3 | 0 | 72.3 | 0 |
| Polymer D | Wt% | 0 | 72.3 | 0 | 0 | 0 | 0 | 0 | 63.624 |
| Tafmer DF605 | Wt% | 19.28 | 19.28 | 0 | 19.28 | 0 | 19.28 | 19.28 | 13.496 |
| Engage 8200 | Wt% | 0 | 0 | 19.28 | 0 | 19.28 | 0 | 0 | 0 |
| Talc HTPultra 5c | Wt% | 0 | 0 | 4.82 | 0 | 0 | 4.82 | 0 | 19.28 |
| Luzenac HAR T84 | Wt% | 4.82 | 4.82 | 0 | 4.82 | 4.82 | 0 | 4.82 | 0 |
| Additives | Wt% | 2.6 | 2.6 | 2.6 | 2.6 | 2.6 | 2.6 | 2.6 | 2.6 |
| MFI | dg/mi n | 20 | 33 | 33 | 10 | 33 | 8 | 23 | 27 |
| Multi-axial impact resistanc e | J | 40 | 32 | 28 | 41 | 41 | 41 | 44 | 26 |
| TS | - | 4 | - | 5.5 | - | 6 | - | 10 | 10 |

According to the information in Table 4, only the polymer compositions according to the invention as exemplified by IE 1 has an MFI of at least 20 dg/min (Suitable for injection molding), a multi-axial impact resistance of at least 42 J and an excellent TS score simultaneously.

**Claims**

1. A polymer composition comprising a heterophasic propylene copolymer and a butene-ethylene copolymer,

   wherein the melt flow index (MFI) of the polymer composition is in the range from 20 to 100 dg/min as measured according to ISO1133-1:2011 with a 2.16kg load at 230°C,
   wherein the amount of the heterophasic propylene copolymer is in the range from 62.3 to 93.4 wt% based on the total amount of the polymer composition, wherein the melt flow index (MFI) of the heterophasic propylene copolymer is in the range from 29 to 103 dg/min as measured according to ISO1133-1:2011 with a 2.16kg load at 230°C, wherein the xylene soluble part of the heterophasic propylene copolymer is in the range from 12.9 to 27.8 wt% based on the total amount of the heterophasic propylene copolymer as measured according to ISO16152:2005,
   wherein the intrinsic viscosity of the xylene soluble part of the heterophasic propylene copolymer is in the range from 1.53 to 1.89 dl/g as measured according to ISO1628-3:2010,
   wherein the amount of the butene-ethylene copolymer is in the range from 2.5 to 31.0 wt% based on the total amount of the polymer composition.

2. The polymer composition according to claim 1, wherein the butene-ethylene copolymer is a 1-butene-ethylene copolymer.

3. The polymer composition according to any one of the previous claims wherein the MFI of the heterophasic propylene copolymer is in the range from 41 to 92 dg/min, more preferably from 45 to 83 dg/min as measured according to ISO1133-1:2011 with a 2.16kg load at 230°C.

4. The polymer composition according to any one of the previous claims wherein the amount of the heterophasic propylene copolymer is in the range from 17.3 to 86.5 wt%, preferably from 70.4 to 80.2 wt% based on the total amount of the polymer composition.

5. The polymer composition according to any one of the previous claims wherein the polymer composition further comprise an inorganic filler, wherein the amount of the inorganic filler is at most 10 wt%, preferably at most 7.5 wt% based on the total amount of the polymer composition.

6. The polymer composition according to any one of the previous claims wherein the MFI of the butene-ethylene copolymer is in the range from 0.1 to 19.8 dg/min, preferably from 0.3 to 11.3 dg/min, more preferably from 0.4 to 3.4 dg/min as measured according to ASTM D1238-13 with a 2.16 kg load at 190°C.

7. The polymer composition according to any one of the previous claims wherein the density of the butene-ethylene copolymer is in the range from 0.857 to 0.901 g/cm$^3$, preferably from 0.861 to 0.888 g/cm$^3$, more preferably from 0.866 to 0.875 g/cm$^3$ as measured according to ASTM D792-13.

8. The polymer composition according to any one of the claims from 5 to 7 wherein the inorganic filler is a talc.

9. The polymer composition according to any one of the claims from 5 to 8 wherein the inorganic filler has a mean size (D50) in the range from 0.1 to 10.2 $\mu$m as measured according to ISO 13317-3:2001(sedimentation analysis, Stockes' law).

10. The polymer composition according to any one of the previous claims wherein butene-ethylene copolymer has a shore A hardness in the range from 44 to 101 as measured according to ASTM D2240-15.

11. The polymer composition according to any one of the previous claims wherein the MFI of the polymer composition is in the range from 25 to 70 dg/min, more preferably from 28 to 50 dg/min as measure according to ISO1133-1:2011 with a 2.16kg load at 230°C.

12. Process for the preparation of an article comprising the sequential steps of:

Providing the polymer composition of claims 1 to 11;
Shaping the polymer composition of claims 1 to 11 into the article, preferably by injection molding.

13. The process according to claim 12 wherein the article is an automotive part preferably the automotive part is air bag cover.

14. Use of the polymer composition of any one of claims 1 to 11 for automotive part, preferably the automotive part is air bag cover.

15. An automotive part comprising the polymer composition of any one of claims 1 to 11 wherein the amount of the polymer composition is at least 95 wt%, preferably at least 97 wt% based on the total amount of the automotive part.

**Patentansprüche**

1. Polymerzusammensetzung, umfassend ein heterophasisches Propylen-Copolymer und ein Buten-Ethylen-Copolymer,
   wobei der Schmelzindex (MFI) der Polymerzusammensetzung im Bereich von 20 bis 100 dg/min liegt, gemessen gemäß ISO1133-1:2011 mit einer Last von 2,16 kg bei 230 °C, wobei die Menge des heterophasischen Propylen-Copolymers im Bereich von 62,3 bis 93,4 Gew.-%, bezogen auf die Gesamtmenge der Polymerzusammensetzung, liegt, wobei der Schmelzindex (MFI) des heterophasischen Propylen-Copolymers im Bereich von 29 bis 103 dg/min liegt, gemessen gemäß ISO1133-1:2011 mit einer Last von 2,16 kg bei 230 °C gemessen, wobei der in Xylol lösliche Anteil des heterophasischen Propylen-Copolymers im Bereich von 12,9 bis 27,8 Gew.-%, bezogen auf die Gesamtmenge des heterophasischen Propylen-Copolymers, gemäß ISO16152:2005, wobei die intrinsische Viskosität des in Xylol löslichen Teils des heterophasischen Propylen-Copolymers im Bereich von 1,53 bis 1,89 dl/g liegt, gemessen gemäß ISO1628-3:2010, wobei die Menge des Buten-Ethylen-Copolymers im Bereich von 2,5 bis 31,0 Gew.-%, bezogen auf die Gesamtmenge der Polymerzusammensetzung, liegt.

2. Polymerzusammensetzung nach Anspruch 1, wobei es sich bei dem Buten-Ethylen-Copolymer um ein 1-Buten-Ethylen-Copolymer handelt.

3. Polymerzusammensetzung nach einem der vorstehenden Ansprüche, wobei der MFI des heterophasischen Propylen-Copolymers im Bereich von 41 bis 92 dg/min, bevorzugter von 45 bis 83 dg/min liegt, gemessen gemäß IS01133-1:2011 mit einer Last von 2,16 kg bei 230 °C.

4. Polymerzusammensetzung nach einem der vorstehenden Ansprüche, wobei die Menge des heterophasischen Propylen-Copolymers im Bereich von 17,3 bis 86,5 Gew.-%, bevorzugt von 70,4 bis 80,2 Gew.-%, bezogen auf die Gesamtmenge der Polymerzusammensetzung, liegt.

5. Polymerzusammensetzung nach einem der vorstehenden Ansprüche, wobei die Polymerzusammensetzung weiter einen anorganischen Füllstoff umfasst, wobei die Menge des anorganischen Füllstoffs höchstens 10 Gew.-%, bevorzugt höchstens 7,5 Gew.-%, bezogen auf die Gesamtmenge der Polymerzusammensetzung, beträgt.

6. Polymerzusammensetzung nach einem der vorstehenden Ansprüche, wobei der MFI des Buten-Ethylen-Copolymers im Bereich von 0,1 bis 19,8 dg/min, bevorzugt von 0,3 bis 11,3 dg/min, bevorzugter von 0,4 bis 3,4 dg/min, gemessen gemäß ASTM D1238-13 mit einer Last von 2,16 kg bei 190 °C, liegt.

7. Polymerzusammensetzung nach einem der vorstehenden Ansprüche, wobei die Dichte des Buten-Ethylen-Copolymers im Bereich von 0,857 bis 0,901 g/cm$^3$, bevorzugt von 0,861 bis 0,888 g/cm$^3$, bevorzugter zwischen 0,866 und 0,875 g/cm$^3$, gemessen gemäß ASTM D792-13, liegt.

8. Polymerzusammensetzung nach einem der Ansprüche 5 bis 7, wobei es sich bei dem anorganischen Füllstoff um Talkum handelt.

9. Polymerzusammensetzung nach einem der Ansprüche 5 bis 8, wobei der anorganische Füllstoff eine mittlere Korngröße (D50) im Bereich von 0,1 bis 10,2 μm aufweist, gemessen nach IS013317-3:2001 (Sedimentationsanalyse, Stokessches Gesetz).

10. Polymerzusammensetzung nach einem der vorstehenden Ansprüche, wobei das Buten-Ethylen-Copolymer eine Shore-A-Härte im Bereich von 44 bis 101 aufweist, gemessen nach ASTM D2240-15.

11. Polymerzusammensetzung nach einem der vorstehenden Ansprüche, wobei die MFI der Polymerzusammensetzung im Bereich von 25 bis 70 dg/min, bevorzugt von 28 bis 50 dg/min liegt, gemessen gemäß ISO1133-1:2011 mit einer Last von 2,16 kg bei 230 °C.

12. Prozess zur Herstellung eines Gegenstands, umfassend die folgenden aufeinanderfolgenden Schritte:

Bereitstellung der Polymerzusammensetzung nach den Ansprüchen 1 bis 11;
Formen des Gegenstands aus der Polymerzusammensetzung nach den Ansprüchen 1 bis 11, bevorzugt durch Spritzgießen.

13. Prozess nach Anspruch 12, wobei es sich bei dem Gegenstand um ein Automobilteil handelt, bevorzugt um eine Airbagabdeckung.

14. Verwendung der Polymerzusammensetzung nach einem der Ansprüche 1 bis 11 für ein Automobilteil, wobei es sich um das Automobilteil bevorzugt um eine Airbagabdeckung handelt.

15. Automobilteil, das die Polymerzusammensetzung nach einem der Ansprüche 1 bis 11 umfasst, wobei die Menge der Polymerzusammensetzung mindestens 95 Gew.-%, bevorzugt mindestens 97 Gew.-%, bezogen auf die Gesamtmenge des Automobilteils, beträgt.

**Revendications**

1. Composition polymère comprenant un copolymère hétérophasique de propylène et un copolymère de butène-éthylène,
dans lequel l'indice de fluidité (MFI) de la composition polymère se situe dans la plage de 20 à 100 dg/min tel que mesuré selon la norme ISO1133-1:2011 avec une charge de 2,16 kg à 230 °C, dans laquelle la proportion de copolymère de propylène hétérophasique est comprise entre 62,3 et 93,4 % en poids par rapport à la masse totale de la composition de polymère, dans laquelle l'indice de fluidité (MFI) de ce copolymère de propylène hétérophasique est compris entre 29 et 103 dg/min tel que mesuré selon la norme ISO1133-1:2011 avec une charge de 2,16 kg à 230 °C, dans laquelle la fraction soluble dans le xylène du copolymère de propylène hétérophasique se situe entre 12,9 et 27,8 % en poids par rapport à la quantité totale de copolymère de propylène hétérophasique mesurée selon la norme ISO16152:2005, dans laquelle la viscosité intrinsèque de la partie soluble dans le xylène du copolymère hétérophasique de propylène se situe entre 1,53 et 1,89 dl/g tel que mesuré selon ISO1628-3:2010, dans laquelle la quantité de copolymère butène-éthylène est comprise entre 2,5 et 31,0 % en poids par rapport à la quantité totale de la composition polymère.

2. Composition polymère selon la revendication 1, dans laquelle le copolymère butène-éthylène est un copolymère 1-butène-éthylène.

3. Composition polymère selon l'une quelconque des revendications précédentes, dans laquelle l'indice de fluidité (MFI) du copolymère de propylène hétérophasique est compris entre 41 et 92 dg/min, plus préférentiellement entre 45 et 83 dg/min tel que mesuré selon la norme ISO1133-1:2011 avec une charge de 2,16 kg à 230 °C.

4. Composition polymère selon l'une quelconque des revendications précédentes, dans laquelle la quantité de copolymère de propylène hétérophasique est comprise entre 17,3 et 86,5 % en poids, de préférence de 70,4 à 80,2 % en poids par rapport à la quantité totale de la composition polymère.

5. Composition polymère selon l'une quelconque des revendications précédentes, dans laquelle la composition polymère comprend en outre une charge inorganique, dans laquelle la quantité de charge inorganique est au plus de 10 % en poids, de préférence au maximum 7,5 % en poids par rapport à la quantité totale de la composition polymère.

6. Composition polymère selon l'une quelconque des revendications précédentes, dans laquelle l'indice de fluidité (MFI) du copolymère butène-éthylène est compris entre 0,1 et 19,8 dg/min, de préférence de 0,3 à 11,3 dg/min, plus préférentiellement entre 0,4 et 3,4 dg/min mesuré selon la norme ASTM D1238-13 avec une charge de 2,16 kg à 190 °C.

**7.** Composition polymère selon l'une quelconque des revendications précédentes, dans laquelle la densité du copolymère butène-éthylène est comprise entre 0,857 et 0,901 g/cm$^3$, de préférence entre 0,861 et 0,888 g/cm$^3$, plus préférentiellement entre 0,866 et 0,875 g/cm$^3$ tel que mesuré selon la norme ASTM D792-13.

**8.** Composition polymère selon l'une quelconque des revendications 5 à 7 dans laquelle la charge inorganique est du talc.

**9.** Composition polymère selon l'une quelconque des revendications 5 à 8, dans laquelle la charge inorganique présente une taille moyenne (D50) comprise entre 0,1 et 10,2 $\mu$m, mesurée selon la norme ISO 13317-3:2001 (analyse de sédimentation, loi de Stockes).

**10.** Composition polymère selon l'une quelconque des revendications précédentes, dans laquelle le copolymère butène-éthylène présente une dureté Shore A comprise entre 44 et 101, mesurée selon la norme ASTM D2240-15.

**11.** Composition polymère selon l'une quelconque des revendications précédentes, dans laquelle l'indice de fluidité (MFI) de la composition polymère est compris entre 25 et 70 dg/min, de préférence entre 28 et 50 dg/min tel que mesuré selon la norme ISO1133-1:2011 avec une charge de 2,16 kg à 230 °C.

**12.** Processus de préparation d'un article comprenant les étapes séquentielles suivantes :

Fourniture de la composition polymère selon les revendications 1 à 11 ;
Mise en forme de la composition polymère selon les revendications 1 à 11 dans l'article, de préférence par moulage par injection.

**13.** Processus selon la revendication 12, dans lequel l'article est une pièce automobile, de préférence la pièce automobile est un couvercle d'airbag.

**14.** Utilisation de la composition polymère selon l'une quelconque des revendications 1 à 11 pour une pièce automobile, de préférence la pièce automobile est un couvercle d'airbag.

**15.** Pièce automobile comprenant la composition polymère selon l'une quelconque des revendications 1 à 11, dans laquelle la quantité de la composition polymère est d'au moins 95 % en poids, de préférence au moins 97 % en poids par rapport à la quantité totale de la pièce automobile.

Figure 1

Figure 2

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020035209 A
- EP 3083819 B1
- WO 0228958 A
- WO 2004087805 A
- WO 20100108866 A
- EP 2495280 A
- US 4282076 A
- EP 0063654 A
- WO 06010414 A
- US 4399054 A
- US 4472524 A
- US 5093415 A
- US 5017714 A
- US 5324820 A
- WO 2016198344 A

**Non-patent literature cited in the description**

- **HIRANO et al.** *Journal of Applied Polymer Science*, 2007, vol. 104, 192-199
- Polypropylene and other Polyolefins. **SER VAN DER VEN**. Studies in Polymer Science. Elsevier, 1990, vol. 7
- Handbook of Chemistry and Physics. CRC Press, 1989